Europäisches Patentamt

European Patent Office

Office européen des brevets

(11) Veröffentlichungsnummer: **0 344 571**
**A2**

(12) # EUROPÄISCHE PATENTANMELDUNG

(21) Anmeldenummer: **89109208.2**

(22) Anmeldetag: **23.05.89**

(51) Int. Cl.⁴: **C08F 2/00 , C08F 14/06**

(30) Priorität: **28.05.88 DE 3818249**

(43) Veröffentlichungstag der Anmeldung:
**06.12.89 Patentblatt 89/49**

(84) Benannte Vertragsstaaten:
**DE ES FR GB IT**

(71) Anmelder: **HOECHST AKTIENGESELLSCHAFT**
**Postfach 80 03 20**
**D-6230 Frankfurt am Main 80(DE)**

(72) Erfinder: **Bötsch, Franz, Dr.**
**Hochfellnstrasse 5**
**D-8269 Burgkirchen(DE)**
Erfinder: **Kilches, Horst**
**Birkenweg 10**
**D-8269 Burgkirchen(DE)**
Erfinder: **Koch, Georg**
**Kampenwandstrasse 22**
**D-8269 Burgkirchen(DE)**
Erfinder: **Schauer, Matthias**
**Lehrer-Neudecker-Weg 1**
**D-8261 Asten(DE)**
Erfinder: **Scheibler, Hermann**
**Ludwigshafener Strasse 19**
**D-8269 Burgkirchen(DE)**

(54) **Verfahren zur Bestimmung des Umsatzgrades bei der Polymerisation von Monomeren in einer flüssigen Dispersion.**

(57) Die Dispersion soll ein flüssiges Dispergiermittel, mindestens ein dispergiertes Polymerisat und ausschließlich gelöstes Monomeres enthalten. Das Monomere soll im Polymeren zu mindestens 2 Gew.-% löslich und im flüssigen Dispergiermittel zu weniger als 100 g/dm³ löslich sein, eine relative Flüchtigkeit, bezogen auf das Dispergiermittel von mindestens 10 besitzen und ein Polymeres bilden, das im flüssigen Dispergiermittel zu weniger als 0,1 g/dm³ löslich ist. Die Kondensationstemperatur des Monomeren im Gasraum über der flüssigen Dispersion und die Temperatur dieser Dispersion wird kontinuierlich gemessen und das Ergebnis zusammen mit den Beträgen der in den Reaktor eingegebenen Mengen an Monomeren und flüssigem Dispergiermittel oder zusammen mit dem ermittelten Polymergehalt der Dispersion zur Errechnung des Umsatzgrades und/oder zur Steuerung des Polymerisationsprozesses verwendet.

EP 0 344 571 A2

**Verfahren zur Bestimmung des Umsatzgrades bei der Polymerisation von Monomeren in einer flüssigen Dispersion**

Die Erfindung betrifft ein Verfahren zur Bestimmung des Umsatzgrades bei der Polymerisation mindestens eines Monomeren in einer flüssigen Dispersion, die Monomeres ausschließlich gelöst enthält, wobei die Temperatur der polymerisierenden Dispersion und die Kondensationstemperatur des Monomeren im Gasraum über der Dispersion kontinuierlich gemessen und das Ergebnis zusammen mit den Beträgen der in die Polymerisation eingegebenen Mengen an Monomeren und flüssigem Dispersionsmittel oder zusammen mit dem ermittelten Polymergehalt der Dispersion zur Errechnung des Umsatzgrades und/oder zur Steuerung des Polymerisationsprozesses verwendet wird.

Der Umsatzgrad, das heißt das Verhältnis der Mengen des in einer Polymerisationsmischung vorhandenen Polymeren zu dem eingesetzten Monomeren, ist eine wichtige Kenngröße. Von ihr hängt die Leistung einer Produktionseinheit ab sowie auch die Qualität, beispielsweise das Molekulargewicht, und andere Eigenschaften des erzeugten Polymeren. Es ist daher nützlich, möglichst zu jedem Zeitpunkt einer laufenden Polymerisation den Umsatzgrad so genau wie möglich zu kennen, um gegebenenfalls rechtzeitig den Polymerisationsprozeß zu beeinflussen, mit dem Ziel, bei optimaler Qualität des Produktes eine maximale Leistung der Produktionseinheit zu erzielen.

Polymerisationen von Monomeren in einem flüssigen Dispergiermittel, häufig Wasser, bei denen das Monomere in dem aus ihm entstandenen Polymeren relativ gut löslich, das Polymere im flüssigen Dispergiermittel jedoch wenig löslich ist, bei denen das Monomere wesentlich flüchtiger ist als das flüssige Dispergiermittel und bei denen ab einem gewissen Umsatzgrad praktisch ausschließlich gelöstes Monomeres in der Polymerisationsmischung vorhanden ist, haben große technische Bedeutung erlangt. Ein Beispiel hierfür ist die Polymerisation von Vinylchlorid in wäßriger Suspension oder Emulsion. Für letzteres Verfahren ist eine Umsatzgradbestimmung bekannt, bei der man einen kleinen Teil der polymerisierenden Mischung aus dem Reaktor entnimmt, entspannt, das Gewicht des durch Entspannung gebildeten Schaums feststellt und in der entspannten schaumfreien Polymerisatdisperion gaschromatographisch nach der "headspace"-Methode den Gehalt an monomerem Vinylchlorid ermittelt. Unter Berücksichtigung der Polymerisationstemperatur und des Luftdrucks während der Schaumgewichtsbestimmung kann der Umsatzgrad berechnet werden.

Dieses Verfahren kann nur diskontinuierlich ausgeführt werden und benötigt einen beträchtlichen Zeitaufwand bis zur Feststellung des Ergebnisses, so daß keine aktuelle Information vorliegt, da sich der Umsatzgrad inzwischen geändert haben kann. Das Verfahren ist ferner häufig nicht hinreichend genau und erfordert bei physiologisch bedenklichen Monomeren, beispielsweise Vinylchlorid, einen zusätzlichen Aufwand, um schädliche Emissionen in die Umwelt zu vermeiden.

Es ist ferner aus DE 36 27 287-A1 ein Verfahren zur verbesserten kontinuierlichen Polymerisation von Vinylchlorid in Emulsion bei Temperaturen von 30 bis 70 °C unterhalb des Sättigungsdruckes bekannt, wobei die Einhaltung des K-Wertes und die Erhaltung der Leistung durch den Polymerisationsdruck erfolgt. Dieses Verfahren wird durch die Anwesenheit von Inertgasen gestört.

Es wurde nun ein Verfahren gefunden, das die soeben beschriebenen Nachteile nicht aufweist. Es handelt sich um ein Verfahren zur Bestimmung des Umsatzgrades bei der Polymerisation in einem Reaktor, in dem sich ein Gasraum und eine polymerisierende Dispersion befindet, die ein flüssiges Dispergiermittel, mindestens ein dispergiertes Polymerisat und ausschließlich gelöste(s) Monomere(s) enthält, wobei mindestens 90 Gew.-%, bezogen auf alle verwendeten Monomeren, von einem Monomeren eingesetzt werden, das unter den Polymerisationsbedingungen folgende Eigenschaften zeigt:

a) es ist in dem aus ihm entstandenen Polymeren zu mindestens 2 Gew.-%, bezogen auf das Polymere, löslich,

b) es ist im flüssigen Dispergiermittel zu weniger als 100 g/l Lösung löslich,

c) seine relative Flüchtigkeit beträgt mindestens 10, bezogen auf das flüssige Dispergiermittel, und

d) es bildet ein Polymeres, das im flüssigen Dispergiermittel zu weniger als 0,1 g/l Lösung löslich ist, welches dadurch gekennzeichnet ist, daß die Kondensationstemperatur dieses Monomeren im Gasraum des Reaktors sowie die Temperatur der polymerisierenden Dispersion kontinuierlich gemessen und das Ergebnis, zusammen mit den Beträgen der in den Reaktor eingegebenen Mengen an Monomeren und flüssigem Dispergiermittel oder zusammen mit dem ermittelten Polymergehalt der Dispersion zur Errechnung des Umsatzgrades und/oder zur Steuerung des Polymerisationsprozesses verwendet wird.

Das Verfahren ist zur Polymerisation sowohl in Suspension wie auch in Emulsion geeignet. Es kann bei absatzweiser (chargenweiser) Polymerisation angewendet werden, vorzugsweise wird es jedoch bei der kontinuierlichen Polymerisation eingesetzt.

2

Die polymerisierende Dispersion enthält neben einem oder mehreren Monomeren und dem oder den daraus gebildeten Polymeren in der Regel mindestens einen Polymerisations-Katalysator und ein flüssiges Dispergiermittel oder eine Mischung flüssiger Dispergiermittel sowie gegebenenfalls oberflächenaktive Stoffe zur Stabilisierung der Dispersion, beispielsweise Schutzkolloide oder andere Suspendiermittel und/oder Emulgatoren. Es können auch noch weitere Polymerisationshilfsstoffe zugesetzt werden, beispielsweise Molekülgrößenregler für das gebildete Polymere (sogenannte Kettenabbruchmittel), Puffersubstanzen, Stabilisiermittel gegen thermische Zersetzung des gebildeten Polymeren sowie auch Zusatzstoffe, die entweder in das Polymere einpolymerisieren oder sich auf den Polymerisatkörnern niederschlagen und geeignet sind, die Verarbeitungseigenschaften des gebildeten Polymerisats zu verbessern. Dies können beispielsweise feinverteilte, zur Pfropfung auf das sich bildende Polymerisat geeignete andere Polymere sowie Gleitmittel, Stabilisatoren gegen Einwirkung von Wärme und/oder Licht, Pigmente, Weichmacher, Mittel zur Verbesserung der Plastifizierbarkeit und Verarbeitbarkeit im thermoplastischen Zustand sein.

Die Art der zu verwendenden Katalysatoren beziehungsweise Katalysatormischungen sowie zugesetzten Aktivatoren der einzusetzenden oberflächenaktiven Stoffe, wie Suspendiermittel und sonstige Polymerisationshilfsstoffe, sowie auch die Art des flüssigen Dispergiermittels beziehungsweise der Dispergiermittelmischung richtet sich im wesentlichen nach dem zu polymerisierenden Monomeren. Sie sind dem Fachmann in der Regel bekannt und können gegebenenfalls in der einschlägigen Fachliteratur, beispielsweise in Houben Weyl "Methoden der organischen Chemie", Georg Thieme Verlag, Stuttgart (1961), Band 14/1, nachgelesen werden.

Bevorzugt wird für das erfindungsgemäße Verfahren ein flüssiges Dispergiermittel eingesetzt, das zu 80 bis 100 Gew.-% aus Wasser und zu 0 bis 20 Gew.-% aus organischen Flüssigkeiten besteht, die mit Wasser mischbar sind, beispielsweise geradkettige oder verzweigte aliphatische Verbindungen, die 1 bis 6, vorzugsweise 1 bis 4, Kohlenstoffatome und 1 bis 3 Hydroxylgruppen enthalten, wobei jedoch ein Kohlenstoffatom nicht mehr als eine Hydroxylgruppe trägt.

Das flüssige Dispergiermittel beziehungsweise die Dispergiermittelmischung kann die weiter oben genannten Katalysatoren und sonstigen Polymerisationshilfsstoffe und gegebenenfalls weitere Zusatzstoffe gelöst oder dispergiert enthalten.

Der Reaktor, in dem das erfindungsgemäße Verfahren durchgeführt wird, muß neben der polymerisierenden Dispersion einen Gasraum enthalten, der groß genug ist, um die weiter unten beschriebene Messung der Kondensationstemperatur durchzuführen. In der Regel wird der überwiegende Teil des Reaktors mit der polymerisierenden Dispersion gefüllt sein. Diese kann beispielsweise durch einen oder mehrere Rührer, durch Umpumpen oder durch Sieden des Monomeren bewegt werden. Eine Bewegung der Dispersion vermittels Durchblasen von nichtkondensierenden Inertgasen ist weniger zweckmäßig, da der Gasraum des Reaktors mindestens 50, vorzugsweise 80 bis praktisch 100 Volumen-% gasförmiges Monomeres enthalten soll. Die polymerisierende Dispersion soll wenigstens so stark bewegt werden, daß in ihr, von einer dünnen wandnahen Zone zu den Temperierflächen abgesehen, keine größeren Temperaturgefälle als etwa 0,5 °C herrschen.

Die polymerisierende Dispersion kann im Reaktionsgefäß auf üblichem Wege, beispielsweise durch einen Doppelmantel, der von einem Temperiermedium durchflossen ist, gekühlt oder geheizt werden. Ebenso sind Einbauten in den Reaktor (sogenannte "Kühlfinger") oder Anbauten, wie zum Beispiel ein Rückflußkühler, zum Zwecke der Temperaturregulierung in der Dispersion möglich.

Das neue Verfahren kann mit gutem Ergebnis ausgeführt werden, wenn die polymerisierende Dispersion Monomeres beziehungsweise Monomere praktisch ausschließlich in gelöster Form enthält. Diese Monomeren können sowohl im Dispergiermittel wie auch im gebildeten Polymerisat gelöst beziehungsweise absorbiert vorliegen. Die Dispersion sollte dagegen im Gleichgewichtszustand praktisch kein dispergiertes freies Monomeres enthalten. Dieser Zustand wird bei der Polymerisation in Dispersionen meistens erst bei höheren Umsatzgraden erreicht, beispielsweise wenn der Umsatz 60 % und mehr beträgt.

Das neue Verfahren eignet sich hauptsächlich für die Homopolymerisation. Es kann aber auch für eine Copolymerisation eingesetzt werden, bei der jedoch ein Monomeres (nachfolgend das "Hauptmonomere" genannt) zu mindestens 90 Gew.-% in der monomeren Mischung vorliegt. Das oder die Comonomeren, die mit dem Hauptmonomeren copolymerisierbar sind, und zu höchstens 10 Gew.-%, vorzugsweise zu 0,3 bis 6 Gew.-%, in der monomeren Mischung enthalten sind, sollen eine relative Flüchtigkeit unter den Polymerisationsbedingungen, bezogen auf das Hauptmonomere, von höchstens 0,1 aufweisen. Zur Durchführung des neuen Verfahrens ist ein Hauptmonomeres geeignet. das unter den Polymerisationsbedingungen (Temperatur, Druck) folgende Eigenschaften hat:

Es soll in dem aus ihm entstandenen Polymeren beziehungsweise Copolymeren zu mindestens 2 Gew.-%, vorzugsweise zu 4 bis 100 Gew.-% und insbesondere zu 6 bis 70 Gew.-%, jeweils bezogen auf das Polymere, löslich sein.

Es soll ferner in dem flüssigen Dispergiermittel beziehungsweise Dispergiermittelgemisch zu weniger als 100 g/l, vorzugsweise zu $10^{-5}$ bis 80 g/l und insbesondere zu $10^{-5}$ bis 50 g/l Lösung löslich sein.

Es soll ferner eine relative Flüchtigkeit haben, die mindestens 10, vorzugsweise 11 bis 200, und insbesondere 20 bis 100, bezogen auf das flüssige Dispergiermittel beziehungsweise Dispergiermittelgemisch, beträgt.

Ferner soll das Hauptmonomere ein Polymeres beziehungsweise Copolymeres bilden, das im flüssigen Dispergiermittel beziehungsweise Dispergiermittelgemisch zu weniger als 0,1 g/l, vorzugsweise zu $1 \cdot 10^{-6}$ bis 0,08 g/l und insbesondere $1 \cdot 10^{-6}$ bis 0,01 g/l Lösung löslich ist.

Außerhalb der genannten Grenzen ist das beschriebene Verfahren zur Bestimmung des Umsatzgrades entweder überhaupt nicht durchführbar oder nicht mit hinreichender Genauigkeit. Innerhalb der beschriebenen Vorzugsgrenzen werden gute Genauigkeiten des Bestimmungsverfahrens erreicht.

Das neue Verfahren wird so durchgeführt, daß die Kondensationstemperatur des Monomeren im Gasraum des Reaktors sowie die Temperatur der polymerisierenden Dispersion kontinuierlich gemessen wird und das Meßergebnis entweder zusammen mit den bekannten Beträgen der in den Reaktor eingegebenen Mengen an Monomeren und flüssigem Dispergiermittel oder zusammen mit dem ermittelten Polymergehalt der Dispersion zur Errechnung des Umsatzgrades und/oder zur Steuerung des Polymerisationsprozesses verwendet wird.

Die Kondensationstemperatur wird beispielsweise, wie weiter unten näher beschrieben, gemessen.

Die Temperatur der polymerisierenden Dispersion wird zweckmäßig mit einem oder mehreren an sich bekannten Temperatur-Meßfühlern, die bei mehreren gleichmäßig über den von der Dispersion erfüllten Raum verteilt sind, gemessen. Bei Dispersionen, die zum Absetzen beziehungsweise zur Belagsbildung an den Wänden des Reaktors neigen, empfiehlt sich ein leicht zu reinigender Temperatur-Meßfühler, beispielsweise eine Einrichtung, wie beschrieben in der deutschen Offenlegungsschrift 28 34 003.

Die Mengen der in den Reaktor eingegebenen Monomeren beziehungsweise der flüssigen Dispergiermittel können mit üblichen Mengenmeßgeräten, beispielsweise Ovalradzähler, Meßblende, Induktivitätsmessung, Rotameter, bestimmt werden. Der Polymergehalt der Dispersion wird beispielsweise ermittelt durch Messung der Dichte, beispielsweise mittels Aräometer oder mit der sogenannten Mohr'schen Waage.

Für die absatzweise (chargenweise) Polymerisation kommt im allgemeinen nur das Verfahren unter Einbeziehung der in den Reaktor eingegebenen Mengen an Monomeren und Dispergiermittel in Frage. Für das kontinuierliche Polymerisationverfahren ist die Mengenmessung ebenfalls vorteilhaft, wenn sie leicht mit ausreichender Genauigkeit durchzuführen ist. Wenn dies nicht der Fall ist, empfiehlt es sich, insbesondere bei kontinuierlichen Verfahren, bei denen sich der Umsatzgrad wenig ändert, zunächst einen empirischen Wert für den Polymergehalt der Dispersion einzusetzen und diesen durch gelegentliche praktische Messungen in Abständen von 1 bis 24 Stunden zu korrigieren.

Das neue Verfahren ist bezüglich des Druckes und des Feststoffgehaltes der Dispersion nicht kritisch. Im allgemeinen arbeitet man bei Temperaturen von 0 bis 120 $^\circ$C, vorzugsweise 20 bis 90 $^\circ$C, und insbesondere bei bis 70 $^\circ$C bei einem Druck von 0,1 bis 10 MPa, vorzugsweise von 0,2 bis 1,6 MPa. Den Feststoffgehalt der Dispersion bei der kontinuierlichen Polymerisation beziehungsweise gegen Ende der absatzweisen (chargenweisen) Polymerisation wird man aus wirtschaflichen Gründen zum Erreichen einer hohen Raum-Zeit-Ausbeute nicht zu niedrig, das heißt nicht unter 20 bis 25 Gew.-% Feststoff, bezogen auf die Dispersion, halten. Andererseits ist ein zu hoher Feststoffgehalt für die gute Durchmischung der Dispersion und Aufrechterhaltung einer möglichst konstanten Temperatur hinderlich, so daß man im allgemeinen einen Feststoffgehalt von 60 Gew.-% bezogen auf die Dispersion, nicht überschreiten wird.

Aus der gemessenen Kondensationstemperatur des Monomeren ($T_K$) und der ebenfalls gemessenen Temperatur der polymerisierenden Dispersion ($T_D$) läßt sich in Kenntnis der Konzentration des Polymeren in der Dispersion oder des Mengenverhältnisses der zugeführten Stoffe der Umsatzgrad sowohl für die kontinuierliche wie auch für die absatzweise (chargenweise) Polymerisation auf der Grundlage bekannter physiko-chemischer Gesetzmäßigkeiten berechnen.

Die einzigen Variablen sind die Kondensationstemperatur des Monomeren und die Temperatur der polymerisierenden Dispersion. Dies gilt für eine absatzweise Polymerisation. bei der die gesamten Monomer- und Dispergiermittelmengen am Anfang zugegeben werden. Bei einer kontinuierlichen Polymerisation ist im allgemeinen auch das soeben genannte Mengenverhältnis variabel beziehungsweise die Konzentration des Polymeren in der Dispersion. Alle anderen für die Rechnung benötigten Werte sind Konstanten, die sich aus üblichen physiko-chemischen Messungen ermitteln lassen.

Wie bereits erwähnt, wird für das neue Verfahren vorzugsweise ein flüssiges Dispergiermittel eingesetzt, das zum überwiegenden Teil aus Wasser besteht. Für Polymerisationen in einem solchen Dispergiermittel sind als Hauptmonomere beispielweise folgende geeignet: Butadien (1,3); Buten (1); Isopren; Vinylethylether; Vinylbromid; Vinylidenchlorid; Chlortrifluorethylen.

Besonders bevorzugt wird Vinylchlorid als Hauptmonomeres eingesetzt.

Die Polymerisation des Vinylchlorids in ·wäßriger Dispersion kann nach bekannten Verfahren erfolgen, wie beispielsweise beschrieben von Helmut Kainer in "Polyvinylchlorid- und Vinylchlorid-Mischpolymerisate", Springer-Verlag, Berlin, 1965, Seiten 12 bis 59, ferner auch in Ullmanns "Enzyklopädie der technischen Chemie", 4. Auflage, Band 19, 1980, Seiten 343 bis 358.

Außer reinem Vinylchlorid kann ebenso bevorzugt auch eine Monomermischung eingesetzt werden, die mindestens 90 Gew.-% Vinylchlorid und mindestens ein weiteres Monomeres enthält, das mit Vinylchlorid mischpolymerisierbar ist und unter den Polymerisationsbedingungen eine relative Flüchtigkeit von höchstens 0,1, bezogen auf Vinylchlorid, aufweist.

Zur Copolymerisation mit Vinylchlorid sind beispielsweise eines oder mehrere folgender Monomerer geeignet: Vinylester von geradkettigen oder verzweigten Carbonsäuren mit 2 bis 20, vorzugsweise 2 bis 4 Kohlenstoffatomen, wie Vinylacetat, -propionat, -butyrat, -2-ethylhexoat, Vinylisotridecansäureester; Vinylether, wie Alkylvinylether mit 5 bis 20 Kohlenstoffatomen, Vinylpyridin, ungesättigte Säuren, wie Malein-, Fumar-, Acryl-Säure und deren Mono- oder Diester mit Mono- oder Dialkoholen mit 1 bis 10 Kohlenstoffatomen; Maleinsäureanhydrid, Maleinsäureimid sowie dessen N-Substitutionsprodukte mit aromatischen, cycloaliphatischen sowie gegebenenfalls verzweigten aliphatischen Substituenten, Acrylnitril, Styrol.

Wie weiter oben erwähnt, können dem polymerisierenden Monomeren beziehungsweise Hauptmonomeren andere Polymerisate zum Zwecke der Pfropfpolymerisation zugesetzt werden. Für die Pfropfpolymerisation mit Vinylchlorid als Monomere können beispielsweise elastomere Polymerisate verwendet werden, die durch Polymerisation von einem oder mehreren folgender Monomerer erhalten werden: Diene, wie Butadien, Cyclopentadien; Olefine, wie Ethylen, Propylen; Styrol, ungesättigte Säuren, Acryl- oder Methacrylsäure, sowie deren Ester mit Mono- oder Dialkoholen mit 1 bis 10 Kohlenstoffatomen, Acrylnitril, Vinylverbindungen, wie Vinylester von geradkettigen oder verzweigten Carbonsäuren mit 2 bis 20, vorzugsweise 2 bis 4 Kohlenstoffatomen, Vinylhalogenide, wie Vinylidenchlorid und, zusammen mit mindestens einem der obengenannten Monomeren, auch Vinylchlorid.

Das erfindungsgemäße Verfahren kann bei der Homo-, Pfropf- oder Copolymerisation von Vinylchlorid nach kontinuierlichem oder absatzweisem (chargenweisem) Polymerisationsverfahren, mit oder ohne Verwendung eines Saat-Vorpolymerisats angewendet werden. Es kann dabei in wäßriger Emulsion oder Suspension in Gegenwart von 0,001 bis 3 Gew.-%, vorzugsweise 0,01 bis 0,3 Gew.-%, bezogen auf Monomere, der üblichen radikalbildenden Katalysatoren, wie zum Beispiel Diaryl-, Diacylperoxide, wie Diacetyl-, Acetylbenzoyl-, Dilauroyl-, Dibenzoyl-, Bis-2,4-dichlorbenzoyl-, Bis-2-methylbenzoylperoxid; Dialkylperoxide, wie Di-tertiär-butylperoxid, Perester, wie tertiär-Butylpercarbonat; tertiär-Butylperacetat, tertiär-Butylperoctoat, tertiär-Butylperpivalat; Dialkylperoxidicarbonate, wie Diisopropyl-, Diethylhexyl-, Dicyclohexyl-, Diethylcyclohexylperoxidicarbonate; gemischte Anhydride von organischen Sulfopersäuren und organischen Säuren, wie Acetylcyclohexylsulfonylperoxid; als Polymerisations-Katalysatoren bekannte Azoverbindungen, wie.Azoisobuttersäurenitril, außerdem Persulfate, wie Kalium-, Natrium- oder Ammoniumpersulfat, Wasserstoffperoxid, tertiär-Butylhydroperoxid oder andere wasserlösliche Peroxide sowie Mischungen verschiedener Katalysatoren polymerisiert werden, wobei peroxidische Katalysatoren auch in Gegenwart von 0,01 bis 1 Gew.-%, bezogen auf Monomere, einer oder mehrerer reduzierender Substanzen, die zum Aufbau eines Redox-Katalysatorsystems geeignet sind, wie zum Beispiel Sulfite, Bisulfite, Dithionite, Thiosulfate, Aldehydsulfoxylate, zum Beispiel Natriumformaldehydsulfoxylat eingesetzt werden können. Gegebenenfalls kann die Polymerisation in Gegenwart von 0,05 bis 10 ppm Metall-Kation des Salzes, bezogen auf eingesetzte Monomere, von löslichen Metallsalzen, beispielsweise des Kupfers, Silbers, Eisens oder Chroms, durchgeführt werden.

Ferner kann die Polymerisation in Gegenwart von 0,01 bis 1 Gew.-%, vorzugsweise 0,05 bis 0,3 Gew.-%, bezogen auf Monomere, von einem oder mehreren der üblichen Schutzkolloide, wie beispielsweise Polyvinylalkohol, der gegebenenfalls noch bis zu 40 Mol-% Acetylgruppen enthält, Cellulosederivate, wie wasserlösliche Methylcellulose, Carboxymethylcellulose, Hydroxyethylcellulose, sowie Gelatine, ferner Mischpolymerisate von Maleinsäure beziehungsweise deren Halbestern, Styrolen, Polyvinylpyrrolidon und Copolymerisate aus Vinylacetat und Vinylpyrrolidon stattfinden. Gegebenenfalls können Teilfettsäureester mehrwertiger Alkohole, wie Glycerinmonostearat, Sorbitanmonolaurat. -oleat oder -palmitat zugesetzt werden.

Außerdem kann die Polymerisation in Gegenwart von 0,8 bis 5 Gew.-%, bezogen auf Monomere, von einem oder mehreren Emulgatoren durchgeführt werden. In Mischung mit den obengenannten Schutzkolloiden können zweckmäßig 0,01 bis 0,3 Gew.-% Emulgatoren, bezogen auf Monomere, eingesetzt werden. Es können anionische, amphotere, kationische sowie nichtionogene Emulgatoren verwendet werden. Als anionische Emulgatoren sind geeignet beispielsweise Alkali-, oder Ammoniumsalze von Fettsäuren, wie Laurin-, Palmitin- oder Stearinsäure, von sauren Fettalkoholschwefelsäureestern, von Paraffinsulfosäuren, von Alkylarylsulfosäuren, wie Dodecylbenzol- oder Dibutylnaphthalinsulfosäure, von Sulfobernsteinsäuredialkylestern sowie die Alkali- und Ammoniumsalze von epoxygruppenhaltigen Fettsäuren, wie Epoxystearinsäure, von Umsetzungsprodukten von Persäuren, zum Beispiel Peressigsäure mit ungesättigten Fettsäuren, wie Öl- oder Linolsäure oder ungesättigten Oxyfettsäuren, wie Rhizinolsäure. Als amphotere beziehungsweise kationenaktive Emulgatoren sind beispielsweise geeignet: Alkylbetaine, wie Dodecylbetain, sowie Alkylammoniumsalze, wie Oxethyldodecylammoniumchlorid. Als nicht-ionogene Emulgatoren sind beispielsweise geeignet: Polyoxyethylenether von Fettalkoholen oder aromatischen Hydroxyverbindungen; Polyoxyethylenester von Fettsäuren sowie Polypropylenoxid-Polyethylenoxid-Kondensationsprodukte.

Neben Katalysatoren, gegebenenfalls Schutzkolloiden und/oder Emulgatoren kann die Polymerisation in Gegenwart von Puffersubstanzen, beispielsweise Alkaliacetate, Borax; Alkaliphosphate, Alkalicarbonate; Ammoniak oder Ammoniumsalzen von Carbonsäuren sowie von Molekülgrößenreglern, wie beispielsweise aliphatische Aldehyde mit 2 bis 4 Kohlenstoffatomen, Chlor- oder Bromkohlenwasserstoffe, wie zum Beispiel Di- und Trichlorethylen, Chloroform, Bromoform, Methylenchlorid, sowie Mercaptanen durchgeführt werden.

Die Vinylchlorid enthaltenden Polymerisate werden vorzugsweise bei Temperaturen von 30 bis 80 °C, insbesondere von 35 bis 70 °C, hergestellt. Der Druck während der Polymerisation liegt etwa zwischen 0,2 und 1,5 MPa.

Das neue Verfahren wird bei der Herstellung von überwiegend Vinylchlorid enthaltenden Polymerisaten vorteilhaft angewendet, wenn der Umsatzgrad 70 bis 99 %, insbesondere 80 bis 97 %, beträgt.

Die Kondensationstemperatur des Hauptmonomeren, das zu mindestens 50 Vol.-% im Gasraum des Polymerisationsreaktors vorliegen soll, wird während der Polymerisation dieses Hauptmonomeren in flüssiger Dispersion vorteilhaft mit einer Vorrichtung gemessen, bestehend aus einem Temperatur-Meßfühler und einer Kühlvorrichtung mit regelbarer Leistung, wobei zweckmäßig die Kühlvorrichtung im Gasraum oberhalb des Temperatur-Meßfühlers und von diesem thermisch isoliert so angebracht ist, daß das an der Kühlvorrichtung gebildete flüssige Kondensat mindestens teilweise über den Temperatur-Meßfühler fließt.

Der Temperatur-Meßfühler wird zweckmäßig stabförmig ausgeführt und kann in einer Schutzhülse beispielsweise ein Thermoelement oder ein Widerstandsthermometer enthalten. Als Kühlvorrichtung kann zweckmäßig ein Doppelmantel oder Schlangenkühler verwendet werden, der von einem flüssigen Kühlmedium, beispielsweise Wasser, durchflossen ist. Die Leistung dieser Kühlvorrichtung kann beispielsweise durch Veränderung der Temperatur und/oder der Durchflußgeschwindigkeit des Kühlmediums reguliert werden. Die Vorrichtung zur Messung der Kondensationstemperatur kann in einem Dom auf dem Oberteil des Polymerisationsreaktors angeordnet sein. Dieser Dom kann in seinem Oberteil eine Öffnung mit Ventil enthalten, durch welche, wenn erforderlich, ein schwacher Gasstrom aus dem Polymerisationsreaktor abgeführt wird.

Das erfindungsgemäße Verfahren ermöglicht mit relativ geringem Meßaufwand eine kontinuierliche, sofort zugängliche Bestimmung des Umsatzgrades der Polymerisation. Da es im geschlossenen System arbeitet, werden schädliche Emissionen physiologisch bedenklicher Monomerer vermieden. Die Meßergebnisse können direkt in eine elektronische Auswerte-Einheit, der ein Rechner angeschlossen ist, eingespeist werden, die neben einer laufenden Anzeige und Registrierung des Umsatzgrades steuernd in den Polymerisationsprozeß eingreifen kann.

Auf diese Weise wird ohne Verlust wertvoller Zeit eine gute Regelung erreicht, wodurch die Raum-Zeit-Ausbeute unter Berücksichtigung der erforderlichen Produktqualität optimiert werden kann.

Nachfolgende Beispiele sollen die Erfindung näher erläutern:

Die angegebenen Meßwerte werden wie folgt ermittelt:

Schaumgewicht:

Kurz nach der Austragöffnung des Kessels, in dem die kontinuierliche Polymerisation erfolgt, ist eine verschließbare Ausströmöffnung von 15 mm Durchmesser angebracht. Zur Messung läßt man die unter Druck stehende Dispersion ausströmen, wobei sie infolge ihres Gehaltes an nicht-polymerisiertem Monomeren aufschäumt. Wenn der Schaumstrom gleichmäßig geworden ist, läßt man ihn in ein vorher gewogenes Metallgefäß, daß bis zum Rand genau 2 l enthält, fließen. Nach vollständiger Füllung des Gefäßes wird der überstehende Schaum über den Gefäßrand abgestrichen und das gefüllte Gefäß sofort danach gewogen. Die Gewichtszunahme ist das Schaumgewicht in g (abgekürzt SG).

K-Wert:

Nach DIN 53 726

Schüttgewicht:

Nach DIN 53 468

Porosität:

Vermittels der Weichmacheraufnahmefähigkeit nach DIN 53 417

Pasten-Viskosität:

In ein 400-ml-Becherglas werden 80 g Diethylhexylphthalat eingewogen, anschließend innerhalb 3 min bei 50 UpM Drehzahl 60 g Polymerisat und innerhalb weiterer 3 min bei 760 UpM Drehzahl weitere 60 g Polymerisat eingerührt. Nun wird 10 min bei 750 UpM weitergerührt und danach die Mischung 60 min auf 20 °C temperiert. Nach dieser Zeit wird von einer Probe die Viskosität in Pascal • Sekunde (Pa • s) mit einem Rotationsviskosimeter ("Rotavisko" der Firma Haake) bei einem Schergefälle von 40 s$^{-1}$ bestimmt, wobei nach dem Einfüllen in die Meßkammer des Gerätes noch 15 min gewartet wird, um eine genaue Temperatur-Einstellung auf 20 °C zu gewährleisten. Analog erfolgt die Messung einer weiteren Probe nach 24 Stunden. Während der gesamten Zeit bleibt die ursprüngliche Mischung auf 20 °C temperiert.

Raum-Zeit-Ausbeute:

Sie wird definiert durch eine bestimmte Menge trockenes Polymerisat (in Tonnen), die in einer Zeiteinheit (hier: 1 Monat, gerechnet zu 658 Produktionsstunden) ununterbrochener, kontinuierlicher Polymerisation in einem bestimmten, für diese Polymerisation zur Verfügung stehenden abgeschlossenen Raum (in m³; beispielsweise Inhalt eines Polymerisationskessels) erzeugt wird. Die Angabe der Raum-Zeit-Ausbeute erfolgt in moto/m³. Die im Verlauf von 14 Tagen aus einer kontinuierlichen Emulsionspolymerisation durch Sprühtrocknung der polymerisathaltigen Dispersion erhaltene Polymerisat-Pulvermenge wird mit dem Faktor 658/336 multipliziert und durch den Inhalt des Polymerisationsbehälters (in m³) dividiert.

Für die Vergleichsversuche A bis C und die erfindungsgemäßen Beispiele 1 bis 3 wird ein senkrecht stehendes zylindrisches Polymerisationsgefäß· mit einem Inhalt von 1,5m³ verwendet, das mit einem von einer Temperierflüssigkeit durchflossenen Doppelmantel, einem Blattrührer sowie Öffnung zum Zuführen der Ausgangsstoffe und Abführen der fertig polymerisierten Dispersion sowie zum Abführen von Gas versehen ist. Das Gefäß besitzt ferner einen stabförmigen Temperatur-Meßfühler, der etwa in der Mitte der Behälterhöhe angebracht ist und in das Behälterinnere hereinragt. Dieser Meßfühler dient zur Bestimmung der Temperatur der polymerisierenden Dispersion. Für die erfindungsgemäßen Beispiele 1 bis 3 enthält das Polymerisationsgefäß außerdem an seinem Deckel in einem Dom mit Ablaßventil angeordnet eine Vorrichtung zur Messung der Kondensationstemperatur des Monomeren und ein Schauglas, das ermöglicht, die vom Temperatur-Meßfühler dieser Vorrichtung abtropfende Kondensatmenge zu beobachten.

Vergleichsversuch A

Das oben beschriebe Polymerisationsgefäß wird zunächst mit Stickstoff gespült, dann mit einer Reaktionsmischung gemäß unten aufgeführtem Rezept gefüllt, die Mischung auf 54 °C erwärmt und in der Folge auf dieser Temperatur gehalten. Nun werden kontinuierlich folgende Ausgangsstoffe zugeführt:

| 1,00 | Gew.-Teile/Stunde | Vinylchlorid |
|------|-------------------|--------------|
| 1,13 | Gew.-Teile/Stunde | Wasser |
| 0,08 | Gew.-Teile/Stunde | Kaliumpersulfat |
| 2,0 | Gew.-Teile/Stunde | Natriumsalze eines Alkylsulfonsäuregemisches, das 80 Gew.-% Alkylsulfonsäuren mit 14 bis 16 C-Atomen enthält, als Emulgator |
| 0,1 | Gew.-Teile/Stunde | $Na_2HPO_4$ |

durch entsprechenden Austrag der polymerisierten Dispersion wird die Standhöhe der Flüssigkeit im Behälter auf 90 % der inneren Behälterhöhe gehalten. Ab 24 Stunden nach Beginn der Polymerisation wird das Schaumgewicht stündlich gemessen und der K-Wert des gebildeten Polymerisates bestimmt. Anhand der ermittelten Werte wird die Zufuhr des Kaliumpersulfats so reguliert, daß möglichst konstante Schaumgewichtswerte beobachtet werden. Obwohl diese Regulierung nur Schwankungen des Schaumgewichtes von 110 bis 115 g ergibt, werden Schwankungen des K-Wertes um bis zu 2 Einheiten über einem Zeitraum von 24 Stunden beobachtet. Nun wurde das Schaumgewicht für weitere 12 Stunden alle halbe Stunde ermittelt und danach die Zufuhr des Kaliumpersulfats reguliert. Hierbei gelang es nicht, die beschriebenen Schwankungen zu vermindern.

Beispiel 1

Es wird verfahren wie beim Vergleichsversuch A, jedoch wird außer der Temperatur der polymerisierenden Dispersion ($T_D$) auch die Kondensationstemperatur ($T_K$) des Monomeren im Gasraum des Reaktors vermittels der obengenannten Vorrichtung bestimmt. Durch den Kühler dieser Vorrichtung wird Wasser von 15 °C in einer Menge von 85 l/Stunde geleitet. Im oberen Teil dieser Vorrichtung wird über das Ventil ein Gasstrom von 100 l/Stunde abgezogen und nach Kompression zwecks Kondensation des darin enthaltenen Monomeren und Abscheidung der nicht-kondensierbaren Gasteile das Kondensat mit dem Monomervorrat vereinigt. Die zugeführten Mengen Vinylchlorid und Wasser als Dispergiermittel, das die angegebenen Polymerisationshilfsstoffe gelöst enthält, werden vermittels Meßblenden bestimmt.

Ab 24 Stunden nach Beginn der Polymerisation wird wiederum anhand des kontinuierlich errechneten Umsatzgrades die Menge des zugegebenen Kaliumpersulfats geregelt. Von der ausgetragenen Dispersion wird jede Stunde eine Probe genommen und der K-Wert des gebildeten Polymeren bestimmt. Die Schwankungen des K-Wertes betragen im Maximum eine Einheit, es wird eine durchschnittliche Schwankung von 0,6 K-Wert-Einheiten festgestellt.

Die Schwankungen der Kondensationstemperatur $T_K$, der Temperatur der polymerisierenden Dispersion $T_D$ und des daraus berechneten Umsatzgrades betragen:

$T_K$ = 39,9 °C = 313,05 K bis 41,1 °C = 314,25 K
$T_D$ = 53,5 °C = 326,65 K bis 54,5 °C = 327,65 K
Umsatzgrad = 89,3 bis 89,7 %

Vinylchlorid ist unter den Polymerisationsbedingungen im gebildeten Polyvinylchlorid zu etwa 11 Gew.-%, bezogen auf das Polymere, löslich, es ist ferner im flüssigen Dispergiermittel (Wasser) zu 6 g/l Lösung löslich, seine relative Flüchtigkeit beträgt 59, bezogen auf das flüssige Dispergiermittel (Wasser), und das aus ihm gebildete Polyvinylchlorid ist im flüssigen Dispergiermittel (Wasser) zu weniger als $10^{-6}$ g/l Lösung löslich.

Vergleichsversuch B

Es wird verfahren wie bei Vergleichsversuch A, wobei 24 Stunden nach Anfahren der Polymerisation das Schaumgewicht halbstündlich bestimmt wird. Nach weiteren 12 Stunden wird die Menge des zudosierten Kaliumpersulfates von 0,08 auf 0,04 Gew.-Teile/Stunde herabgesetzt. Trotz der halbstündigen Schaumgewichtsbestimmung wird ein deutliches Absinken der gemessenen Werte, verursacht durch die Verlangsamung der Reaktion durch den geringeren Aktivatoranteil, erst 5 Stunden nach dem Beginn der verminderten Kaliumpersulfat-Zugabe festgestellt. Kurze Zeit danach sinkt das Schaumgewicht drastisch ab und die Polymerisat-Dispersion beginnt zu koagulieren, so daß die Polymerisation abgebrochen werden muß. In einem zweiten Versuch wird sofort nach Feststellung des Absinkens des Schaumgewichtes Kaliumpersulfat nachdosiert, um den Umsatzschwund auszugleichen. Es gelingt zwar auf diese Weise, die Polymerisation weiterzuführen, jedoch wird in der ausgetragenen Polymerisat- Dispersion ein erheblicher Anteil agglome-

8

rierter Teilchen (sogenannter "Grieß") festgestellt. Erst nach weiteren 36 Stunden sind die Folgen der in diesem Fall künstlich herbeigeführten Störung behoben.

Beispiel 2

Es wird verfahren wie in Beispiel 1, jedoch werden nicht die eingesetzten Mengen Vinylchlorid und flüssiges Dispergiermittel (wäßrige Lösung der Polymerisations-Hilfsstoffe) zur Berechnung des Umsatzgrades herangezogen, sondern eine aus vorherigen Versuchen ermittelte Konzentration des Polymeren in der Dispersion von 44,7 Gew.-%. Dieser Wert wird anhand von halbstündigen Messungen kontrolliert und mit den Meßwerten die laufende Berechnung korrigiert. Analog dem Vergleichsversuch B wird 36 Stunden nach Beginn der Polymerisation die Menge des zugegebenen Kaliumpersulfates von 0,08 auf 0,04 Gew.-Teile/Stunde herabgesetzt. Bereits nach 45 Minuten wird eine Senkung des Umsatzgrades festgestellt, die nach weiteren 15 Minuten durch Zugabe der ursprünglichen Kaliumpersulfat-Menge ohne weitere Störungen wieder auf den ursprünglichen Umsatzgrad gebracht werden kann. Folgende Werte wurden gemessen:

| Zeit in min nach Senkung der Kaliumpersulfatzugabe | 0 | 15 | 30 | 45 | 60* | 75 | 90 | 105 |
|---|---|---|---|---|---|---|---|---|
| Kondensationstemperatur $T_K$ (°C) | 40,6 | 40,7 | 41,1 | 41,4 | 41,4 | 41,1 | 40,9 | 40,7 |
| Temperatur der polymerisierenden Dispersion $T_D$ | 54,1 | 54,2 | 54,2 | 54,1 | 54,1 | 54,0 | 54,2 | 54,2 |
| Umsatzgrad (%) | 89,5 | 89,5 | 89,3 | 89,1 | 89,1 | 89,2 | 89,4 | 89,5 |
| Bei der mit * gekennzeichneten Zeit wird wieder die ursprüngliche Kaliumpersulfat-Menge (0,08 Gew.-Teile/Stunde) zugegeben. | | | | | | | | |

Vergleichsversuch C

Es wird verfahren wie beim Vergleichsversuch A, jedoch wird folgendes Reaktionsgemisch in den angegebenen Mengen pro Stunde bei einer Temperatur der polymerisierenden Dispersion von 51 °C kontinuierlich polymerisiert:

| 95 | Gew.-Teile/Stunde | Vinylchlorid |
|---|---|---|
| 5 | Gew.-Teile/Stunde | Vinylacetat |
| 120 | Gew.-Teile/Stunde | Wasser |
| 0,15 | Gew.-Teile/Stunde | Kaliumpersulfat |
| 0,2 | Gew.-Teile/Stunde | Natriumsalze eines Alkylsulfonsäuregemisches, das 80 Gew.-% Alkylsulfonsäuren mit 14 bis 16 C-Atomen enthält, als erster Emulgator und |
| 1,8 | Gew.-Teile/Stunde | des Natriumsalzes des Sulfobernsteinsäurediisodecylesters als zweiter Emulgator |
| 0,1 | Gew.-Teile/Stunde | Natriumbicarbonat. |

Wiederum wird die Standhöhe der polymerisierenden Dispersion im Reaktionsgefäß durch Regelung des Austrages auf 90 % der inneren Gesamtbehälterhöhe gehalten und, beginnend 24 Stunden nach dem Anfang der Polymerisation, stündlich das Schaumgewicht der Dispersion und der K-Wert des gebildeten Polymerisates bestimmt. Die erste Messung ergibt ein Schaumgewicht von 137 g und einen K-Wert von 68,9.

Über die Regelung der Polymerisationstemperatur vermittels des Kühlmediums, das den Doppelmantel des Reaktors durchfließt, sowie über die zugeführte Menge Kaliumpersulfat wird das Schaumgewicht möglichst konstant gehalten, innerhalb eines Versuchslaufes von 15 Tagen werden nur geringe Schwankungen im Bereich von 135 bis 140 g beobachtet.

Neben der Bestimmung des K-Wertes wird einmal täglich die Pastenviskosität des erzeugten Polymeren bestimmt. Zu diesem Zweck wird die in 2 Stunden aus dem Reaktor ausgetragene Polymerisat-Dispersion durch Versprühen getrocknet, das trockene Polymere gesichtet, die Teilchen über 35 μm

getrennt auf eine mittlere Teilchengröße von 10 bis 12 μm gemahlen und mit dem gesichteten feinteiligen Produkt wieder vereinigt. Die eigentliche Messung der Pastenviskosität erfolgt, wie zuvor beschrieben. Die beiden ermittelten Eigenschaften des Polymerisates schwanken innerhalb der 15tägigen Herstellungsperiode wie folgt:

| Pastenviskosität | (nach 1 Stunde) : | 7,30 bis 10,0 Pa • s |
|---|---|---|
| | (nach 14 Stunden) : | 9,40 bis 13,4 Pa • s |
| K-Wert: | = 68,1 bis 70,3 | |

Die restliche, im Verlauf von 15 Tagen produzierte Polymerisat-Dispersion wird gemeinsam aufgearbeitet und liefert ein Polymerisatpulver mit folgenden Werten:

| Pastenviskosität | (nach 1 Stunde): | 8,2 Pa • s |
|---|---|---|
| | (nach 14 Stunden): | 11,5 Pa • s |

die Raum-Zeit-Ausbeute beträgt 36 moto/m$^3$

Beispiel 3

Es wird verfahren, wie im Vergleichsversuch C beschrieben, der Umsatzgrad wird jedoch berechnet aus den gemessenen Werten für die Kondensationstemperatur des Hauptmonomeren, der Polymerisierenden Dispersion und dem gemessenen Mengenverhältnis des zugeführten Hauptmonomeren (Vinylchlorid) zum zugeführten Dispergiermittel (Wasser).

24 Stunden nach Beginn der Polymerisation wird mit der kontinuierlichen Messung der Werte und Berechnung des Umsatzgrades begonnen, wobei folgende Zahlen festgestellt werden:

Kondensationstemperatur = 31,9 °C = 305,05 K

Temperatur der polymerisierenden Dispersion = 51 °C = 324,15 K

Umsatzgrad = 89,0 %

Während der nun folgenden 15tägigen Dauer der kontinuierlichen Polymerisation wird wiederum, wie bei Vegleichsversuch C, über die Reaktorkühlung und die Zugabe des Kaliumpersulfat-Initiators die Polymerisation auf möglichst konstanten Umsatzgrad geregelt. Es werden Schwankungen von 88,8 bis 89,2 % Umsatz festgestellt.

Auch während dieses Versuches wird stündlich der K-Wert und täglich die Pastenviskosität des erzeugten Polymeren, wie im Vergleichsversuch C beschrieben, bestimmt. Es werden folgende Schwankungen ermittelt:

| Pastenviskosität | nach 1 Stunde Lagerung: | 6,0 bis 7,0 Pa • s |
|---|---|---|
| | nach 24 Stunden Lagerung: | 7,8 bis 8,8 Pa • s |
| K-Wert | = 68,6 bis 69,5 | |

die gesamte Produktion der 15 Tage wird aufgearbeitet, wie im Vergleichsversuch C beschrieben, und am Polymerisat folgende Werte bestimmt:

| Pastenviskosität | nach 1 Stunde Lagerung: | 6,8 Pa • s |
|---|---|---|
| | nach 24 Stunden Lagerung: | 8,8 Pa • s |

die Raum-Zeit-Ausbeute beträgt 40 moto/m$^3$.

Vergleichsversuch D

Es wird ein senkrecht stehendes, zylindrisches Polymerisationsgefäß mit einem Inhalt von 1,5 m$^3$

verwendet, das ausgerüstet ist, wie das unter Vergleichsversuch A beschriebene, mit dem Unterschied, daß es anstelle des Blattrührers einen Impellerrührer der Firma Pfaudler, Bundesrepublik Deutschland, enthält. Das Polymerisationsgefäß wird mit Stickstoff gespült und mit folgender Reaktionsmischung beschickt:

| 80 | Gew.-Teile | Vinylchlorid |
|---|---|---|
| 160 | Gew.-Teile | Wasser |
| 0,12 | Gew.-Teile | eines teilhydrolysierten Polyvinylacetates mit einem Hydrolysegrad von 75 % und einer Viskosität der 4%igen wäßrigen Lösung bei 20 °C von 10 Pa · s |
| 0,032 | Gew.-Teile | Diisopropylperoxidicarbonat. |

Der Polymerisationsreaktor ist zu 85 % seiner inneren Gesamtbehälterhöhe mit der Reaktionsmischung gefüllt. Die Reaktionsmischung wird nun auf 60 °C erwärmt und auf dieser Temperatur gehalten. Nachdem der Druck im Polymerisationsreaktor auf 0,7 MPa abgefallen ist, entsprechend einem Umsatz von circa 92,1 % bei einem gaschromatographisch bestimmten Inertgasanteil von 20 Vol.-% im Gausraum, wird der Reaktor gekühlt, entspannt, das gebildete Polymere wie üblich abgeschieden, getrocknet und an ihm das Schüttgewicht sowie die Porosität, wie weiter oben beschrieben, ermittelt.

In dieser Art werden 10 Versuche hintereinander gefahren und hierbei folgende Schwankungen der Eigenschaften des Polymeren festgestellt:

Schüttgewicht: 485 bis 530 g/l
Porosität (Weichmacheraufnahme): 23,8 bis 27,2 %.

Beispiel 4

Es wird verfahren wie im Vergleichsversuch D beschrieben, wobei jedoch ein Polymerisationsreaktor eingesetzt wird, der an seinem Deckel eine Vorrichtung zur Messung der Kondensationstemperatur des Monomeren und ein Schauglas enthält, das es erlaubt, das von dem Temperatur-Meßfühler abtropfende Kondensat zu beobachten. 6 Stunden nach Beginn der Polymerisation, wenn der Umsatzgrad etwa 77 % erreicht hat, wird mit der Messung der Kondensationstemperatur des Monomeren und der Temperatur der polymerisierenden Dispersion begonnen. Aus den kontinuierlich anfallenden Meßwerten wird der Umsatzgrad unter Einsetzung des zu Beginn der Polymerisation eingegebenen Mengenverhältnisses von Vinylchlorid und Wasser laufend berechnet. Bei 92,1 % Umsatz wird der Polymerisationsreaktor abgekühlt, entspannt, das Polymerisat wie üblich aufgearbeitet und an ihm das Schüttgewicht und die Porosität, wie oben beschrieben, ermittelt.

An zehn hintereinander durchgeführten Versuchen wird folgende Schwankungsbreite der Eigenschaften des Polymeren festgestellt:
Schüttgewicht: 500 bis 510 g/l
Porosität (Weichmacheraufnahme): 25,2 bis 25,6 %.

**Ansprüche**

1. Verfahren zur Bestimmung des Umsatzgrades bei der Polymerisation in einem Reaktor, in dem sich ein Gasraum und eine polymerisierende Dispersion befindet, die ein flüssiges Dispergiermittel, mindestens ein dispergiertes Polymerisat und ausschließlich gelöste(s) Monomere(s) enthält, wobei mindestens 90 Gew.-%, bezogen auf alle verwendeten Monomeren, von einem Monomeren eingesetzt wird, das unter den Polymerisationsbedingungen folgende Eigenschaften zeigt:
a) es ist in dem aus ihm entstandenen Polymeren zu mindestens 2 Gew.-%, bezogen auf das Polymere, löslich,
b) es ist im flüssigen Dispergiermittel zu weniger als 100 g/l Lösung löslich,
c) seine relative Flüchtigkeit beträgt mindestens 10, bezogen auf das flüssige Dispergiermittel, und
d) es bildet ein Polymeres, das im flüssigen Dispergiermittel zu weniger als 0,1 g/l Lösung löslich ist;
dadurch gekennzeichnet, daß die Kondensationstemperatur dieses Monomeren im Gasraum des Reaktors sowie die Temperatur der polymerisierenden Dispersion kontinuierlich gemessen und das Ergebnis, zusammen mit den Beträgen der in den Reaktor eingegebenen Mengen an Monomeren und flüssigem Dispergiermittel oder zusammen mit dem ermittelten Polymergehalt der Dispersion, zur Errechnung des Umsatzgrades und/oder zur Steuerung des Polymerisationsprozesses verwendet wird.

2. Verfahren nach Anspruch 1, dadurch gekennzeichnet, daß es während einer kontinuierlichen Polymerisation durchgeführt wird.

3. Verfahren nach Ansprüchen 1 und 2, dadurch gekennzeichnet, daß das flüssige Dispergiermittel zu 80 bis nahezu 100 Gew.-% aus Wasser besteht.

4. Verfahren nach Ansprüchen 1 bis 3, dadurch gekennzeichnet, daß als Monomeres Vinylchlorid eingesetzt wird.

5. Verfahren nach Anspruch 4, dadurch gekennzeichnet, daß als Monomeres eine Mischung eingesetzt wird, die mindestens 90 Gew.-% Vinylchlorid und mindestens ein weiteres Monomeres enthält, das mit Vinylchlorid mischpolymerisierbar ist und unter Polymerisationsbedingungen eine relative Flüchtigkeit von höchstens 0,1, bezogen auf Vinylchlorid, aufweist.

6. Verfahren nach Ansprüchen 4 und 5, dadurch gekennzeichnet, daß bei 30 bis 80 °C polymerisiert wird.

7. Verfahren nach Anspruch 2, dadurch gekennzeichnet, daß der Feststoffgehalt der polymerisierenden flüssigen Dispersion in Abständen von 1 bis 24 Stunden an einer Probe bestimmt und der erhaltene Wert zur Korrektur des in die Umsatzberechnung eingegebenen konstanten Wertes für den Feststoffgehalt verwendet wird.

8. Verfahren nach Ansprüchen 4 bis 6, dadurch gekennzeichnet, daß die gemessene Kondensationstemperatur zur laufenden Errechnung des Umsatzgrades und/oder zur Steuerung des Polymerisationsprozesses verwendet wird, wenn der Umsatzgrad 70 bis 99 % beträgt.